Europäisches Patentamt

European Patent Office

Office européen des brevets

(11) Numéro de publication : **0 312 443 B1**

(12) **FASCICULE DE BREVET EUROPEEN**

(45) Date de publication du fascicule du brevet :
**15.04.92 Bulletin 92/16**

(21) Numéro de dépôt : **88402565.1**

(22) Date de dépôt : **11.10.88**

(51) Int. Cl.⁵ : **B60Q 1/40**

(54) **Dispositif de réinitialisation de commutateurs électriques pour l'alimentation des indicateurs de changement de direction d'un véhicule automobile.**

(30) Priorité : **13.10.87 FR 8714115**

(43) Date de publication de la demande :
**19.04.89 Bulletin 89/16**

(45) Mention de la délivrance du brevet :
**15.04.92 Bulletin 92/16**

(84) Etats contractants désignés :
**DE ES GB IT**

(56) Documents cités :
**US-A- 4 335 284**

(73) Titulaire : **JAEGER**
**2, rue Baudin**
**F-92303 Levallois-Perret (FR)**

(72) Inventeur : **Lagier, Daniel**
**135, rue des Ombraies**
**F-92000 Nanterre (FR)**

(74) Mandataire : **Martin, Jean-Jacques et al**
**Cabinet REGIMBEAU 26, Avenue Kléber**
**F-75116 Paris (FR)**

## Description

La présente invention concerne le domaine des dispositifs assurant le retour automatique en position de repos des commutateurs électriques pour l'alimentation des indicateurs de changement de direction d'un véhicule automobile. Par la suite, ces dispositifs seront dénommés dispositifs de réinitialisation.

On a déjà proposé de nombreux dispositifs de réinitialisation pour commutateurs électriques contrôlant les indicateurs de changement de direction des véhicules automobiles (par exemple US-A-4 335 284).

D'une façon générale, ces dispositifs comprennent une came de commande entraînée par la rotation du volant. Cette came peut être portée par le moyeu de volant lui-même, ou guidée à rotation sur une platine support, en étant liée à rotation avec le volant.

Les dispositifs de réinitialisation jusqu'ici proposés, bien qu'ils aient rendu déjà de grands services, présentent différents inconvénients.

La présente invention a pour but de proposer un nouveau dispositif de réinitialisation qui élimine les inconvénients de la technique antérieure.

Un but principal de la présente invention est de proposer un dispositif de réinitialisation qui admette un écart de positionnement tant radial, qu'axial, entre l'élément portant la came de commande et le volant.

Un but auxiliaire de la présente invention est de proposer un nouveau dispositif de réinitialisation adapté pour s'auto-centrer sur une platine support en cas de retrait du volant.

Ces différents buts sont atteints, dans le cadre de la présente invention, grâce à un dispositif de réinitialisation comprenant un élément moteur lié à rotation avec le volant du véhicule, une bague de commande guidée à rotation sur une platine support, et une pièce intermédiaire d'entraînement, assurant une liaison à rotation entre l'élément moteur et la bague de commande tout en étant susceptible de débattement radial et/ou axial par rapport à l'élément moteur ou la bague de commande.

De préférence, selon l'invention, la pièce intermédiaire d'entraînement est guidée à rotation sur la platine entre l'élément moteur et la bague de commande, la pièce intermédiaire d'entraînement étant liée à rotation avec l'élément moteur tout en étant susceptible de débattement radial par rapport à celui-ci, et d'autre part liée à rotation avec la bague de commande tout en étant susceptible de débattement axial par rapport à celle-ci.

De préférence, selon l'invention, un organe élastique est intercalé entre la bague de commande et la pièce intermédiaire d'entraînement, pour solliciter cette pièce vers le volant.

De façon avantageuse, la pièce intermédiaire d'entraînement est maintenue sur la platine support à l'encontre de la sollicitation exercée par l'organe élastique, par au moins une languette élastique solidaire de la platine.

Selon une autre caractéristique avantageuse de l'invention, chacune des languettes élastiques possède une surface d'arrêt non plane, de préférence en forme de dièdre apte à reposer contre une structure homologue ménagée sur la pièce intermédiaire d'entraînement, pour assurer un effet de centrage de celle-ci en cas de retrait du volant.

Selon une autre caractéristique avantageuse de l'invention, la pièce intermédiaire d'entraînement possède au moins une découpe radiale recevant un doigt d'entraînement solidaire de l'élément moteur.

Selon une autre caractéristique avantageuse de l'invention, chaque découpe précitée possède deux bords d'engagement inclinés.

Selon une autre caractéristique avantageuse de l'invention la liaison à rotation définie entre la pièce intermédiaire d'entraînement et la bague de commande est définie par au moins une tige de commande et un alésage complémentaire ménagés respectivement sur la bague de commande ou la pièce intermédiaire d'entraînement.

La présente invention, apparaîtra à la lecture de la description détaillée qui va suivre et en regard des dessins annexés, donnés à titre d'exemple non limitatif et sur lesquels la figure unique annexée représente une vue schématique en perspective éclatée d'un dispositif de réinitialisation conforme à la présente invention.

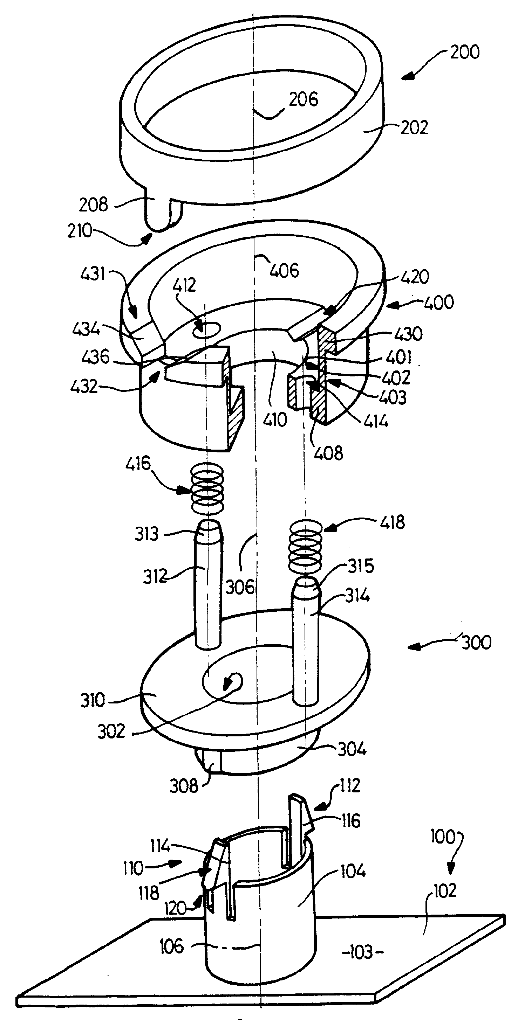

On aperçoit sur la figure 1 annexée un dispositif comprenant pour l'essentiel une platine support 100, un élément moteur 200, une bague de commande 300 et une pièce intermédiaire d'entraînement 400.

La platine support 100 comprend une paroi plane 102. La paroi 102 est pourvue d'un alésage traversant. De plus, la paroi 102 est munie, sur l'une de ses faces 103, et sur la périphérie de l'alésage précité, d'un manchon cylindrique 104. L'axe 106 du manchon 104 s'étend perpendiculairement à la paroi 102. L'alésage traversant la paroi 102 et le manchon 104 sont adaptés pour recevoir en traversée, libre de rotation, l'arbre de direction du véhicule automobile.

La bague de commande 300 possède un axe général de symétrie référencé 306. La bague de commande 300 présente un alésage interne 302 complémentaire de la périphérie extérieure du manchon 104. Ainsi, la bague de commande 300 peut être engagée sur le manchon 104 et guidée à rotation sur celui-ci.

La surface périphérique extérieure 304 de la bague 300 est généralement cylindrique de révolution autour de l'axe 306 précité. Cependant, la surface périphérique extérieure 304 est pourvue d'au moins une protubérance 308 servant de came de commande. L'utilisation d'une telle came de commande 308 est classique en soi pour l'homme de l'art. La structure de celle-ci ne sera donc pas décrite plus en détail par la suite.

La bague de commande 300 est pourvue d'une couronne 310. La couronne 310 est centrée sur l'axe 306 et s'étend transversalement à celui-ci. La couronne 310 est munie de deux tiges d'entraînement 312, 314. Les tiges 312, 314 sont solidaires de la surface de la couronne 310 opposée à la paroi 102. Les tiges 312, 314 sont cylindriques selon le mode de réalisation illustré sur les figures annexées. Elles s'étendent parallèlement à l'axe 306 et sont diamètralement opposées par rapport à celui-ci. De préférence, les tiges d'entraînement 312, 314 sont effilées au niveau de leur extrémité libre 313, 315.

L'élément moteur 200 possède un axe général de symétrie référencé 206.

L'élément moteur 200 est formé d'un anneau 202 centré sur l'axe 206. L'anneau 202 est muni sur sa surface inférieure en couronne d'un doigt de commande 208. Le doigt de commande 208 s'étend parallèlement à l'axe 206, en direction de la pièce intermédiaire d'entraînement 400. De préférence, l'extrémité libre du doigt de commande 208, opposée à l'anneau 202, est effilée ou arrondie comme illustrée sur la figure annexée.

La pièce intermédiaire d'entraînement 400 possède un axe général de symétrie référencé 406. Elle comprend un fourreau 402 cylindrique de révolution autour de cet axe.

Au voisinage de son extrémité inférieure et sur sa surface périphérique intérieure 401, le fourreau 402 est muni d'une nervure annulaire 408.

De même, au voisinage de son extrémité supérieure, et sur sa surface périphérique extérieure 403, le fourreau 402 est muni d'une nervure annulaire 430.

La surface périphérique intérieure 410 de la nervure 408 est cylindrique de révolution autour de l'axe 406. De plus, la surface cylindrique 410 est complémentaire de la surface extérieure du manchon 104. Ainsi, la pièce intermédiaire d'entraînement 400 peut être engagée sur le manchon 104 et guidée à rotation sur celui-ci.

La nervure 408 possède, dans son épaisseur, deux alésages traversants 412, 414. Les alésages 412, 414 s'étendent parallèlement à l'axe 406. Ils sont diamètralement opposés par rapport à celui-ci. De plus, les alésages 412, 414 sont généralement complémentaires des tiges 312, 314. Ils reçoivent celles-ci libres de translation parallèlement à l'axe 406.

L'homme de l'art comprendra aisément que les tiges 312, 314 étant excentrées par rapport à l'axe 306, l'engagement des tiges 312, 314 dans les alésages 412, 414 assure une liaison à rotation entre la bague de commande 300 et la pièce intermédiaire d'entraînement 400.

Des ressorts 416, 418 sont engagés sur les tiges 312, 314, entre la surface supérieure de la couronne 310 et la surface inférieure de la nervure 408. Ainsi, les ressorts 416, 418 repoussent la pièce intermédiaire d'entraînement 400 en éloignement de la couronne 310, soit en rapprochement du moyeu de volant qui porte l'anneau 202.

Cependant, la pièce intermédiaire d'entraînement 400 est maintenue sur le manchon de guidage 104 par une paire de languettes élastiques 110, 112. Celles-ci sont avantageusement solidaires du manchon 104.

Plus précisément encore, les languettes élastiques 110, 112, s'étendent parallèlement à l'axe 106, en éloignement de la paroi 102. Les languettes 110, 112 sont diamètralement opposées par rapport à l'axe 106. Elles sont pourvues chacune, au niveau de leur extrémité libre opposée à la paroi 102, d'une denture 114, 116. Les dentures 114, 116 font saillie sur l'extérieur de l'enveloppe du manchon 104 pour venir en prise avec la surface supérieure de la nervure 408. Les dentures 114, 116 possèdent une section triangulaire dans un plan de coupe passant par l'axe 106.

Chaque denture 114, 116 possède une surface d'engagement 118 et une surface d'arrêt 120. La surface d'engagement 118, qui constitue la surface extérieure principale des dentures, converge vers l'axe 106 en éloignement de la paroi de base 102.

La surface d'arrêt 120 s'étend pour l'essentiel transversalement à l'axe 106. De préférence la surface d'engagement 120 est formée de deux faces planes qui s'intersectent au niveau d'une arête radiale par rapport à l'axe 106 et qui divergent par rapport à la paroi de base 102 en éloignement de cette arête commune. En d'autres termes, les deux faces planes de la surface d'arrêt 120 délimitent un dièdre convexe dirigé vers la paroi de base 102.

Les dentures 114, 116 coopèrent avec deux rainures radiales 420, diamètralement opposées ménagées sur la surface supérieure de la nervure 408.

Ces rainures 420 sont de préférence délimitées par deux faces planes qui s'intersectent au niveau d'une arête radiale par rapport à l'axe 406, et qui divergent par rapport à la paroi de base 102 en éloignement de cette arête commune. En d'autres termes, les rainures 420 forment des dièdres concaves orientés à l'opposé de la paroi de base 102.

L'homme de l'art comprendra aisément que la coopération définie entre les dentures 114, 116 et les rainures 420 assure une indexation de la pièce intermédiaire d'entraînement 400, et donc de la bague de commande 300, autour de l'axe 406 par rapport à la platine support 100.

Le cas échéant, en variante, la surface d'arrêt 120 pourrait définir un dièdre concave et les structures 420 une nervure convexe homologue.

La nervure 430 possède une découpe 432. La découpe 432 est radiale par rapport à l'axe 406. Elle présente une symétrie par rapport à un plan passant par l'axe 406. La découpe 432 s'étend sur toute l'épaisseur (considérée parallèlement à l'axe 406) et toute l'étendue radiale (considérée transversalement à l'axe 406) de la nervure 430.

En d'autres termes, la nervure 430 a la forme d'un anneau ouvert.

La largeur de la découpe 432, considérée dans une direction périphérique par rapport à l'axe 406, est complémentaire de la largeur du doigt de commande 208, considérée dans une direction périphérique par rapport à l'axe 206.

Pour faciliter l'engagement du doigt de commande 208 dans la découpe 432, celle-ci est pourvue de deux faces d'engagement 434, 436. Les faces d'engagement 434, 436 débouchent sur la surface supérieure 431 de la nervure 430 dirigée vers l'anneau 200. Les faces d'engagement 434, 436 divergent par rapport à la paroi 102 en éloignement du plan de symétrie de la découpe 432.

Pour assurer le montage du dispositif de réinitialisation conforme à la présente invention, il suffit d'engager successivement la bague de commande 300 sur le manchon 104, les ressorts 416 et 418 sur les tiges d'entraînement 312, 314 et enfin la pièce intermédiaire d'entraînement 400 sur le manchon 104.

Lors de l'engagement de la bague de commande 300 et de la pièce intermédiaire d'entraînement 400 sur le manchon 104, les languettes 110, 112 fléchissent élastiquement vers l'intérieur en rapprochement de l'axe 106. Les languettes 110, 112 reprennent leur position de repos initial, lorsque les dentures 114, 116 émergent au-dela de la surface supérieure de la nervure 408. Les surfaces d'arrêt 120 font alors saillie à l'extérieur de l'enveloppe du manchon 104 pour maintenir la pièce intermédiaire d'entraînement 400 et donc la bague de commande 300 sur la platine support 100.

En position assemblée les axes 106, 306 et 406 sont coaxiaux. De plus, la bague de commande 300 et la pièce intermédiaire d'entraînement 400 sont guidées à rotation sur le manchon 104 autour de l'axe 106.

Lorsque le volant est assemblé sur l'arbre de direction, le doigt de commande 208 est introduit dans le découpe 432. De préférence, la mise en place de la bague d'entraînement 200 sur la pièce intermédiaire 400 entraîne un rapprochement de la pièce 400 et de la platine support 100, avec compression des ressorts 416, 418, pour libérer les rainures 420 des dentures 114, 116.

L'introduction du doigt de commande 208 dans la découpe 432 assure une liaison à rotation entre l'anneau 200 et la pièce intermédiaire 400, même si ceux-ci sont désaxés. En d'autres termes, la pièce intermédiaire 400 est susceptible de débattement radial par rapport à l'anneau d'entraînement 200.

L'entraînement à rotation de la pièce intermédiaire 400 est transmis à la bague de commande 300 par les doigts excentrés 312, 314, pour permettre un retour automatique en position de repos, grâce à la came 308, d'un commutateur porté par la platine 100.

On notera par ailleurs que les ressorts 416, 418 permettent de rattraper tout jeu présent entre l'anneau 200 solidaire du moyeu de volant et la platine support 100.

Lorsque le volant est retiré, à des fins de maintenance ou de réglage angulaire, les ressorts 416, 418 sollicitent la pièce intermédiaire 400 en éloignement de la platine support 100 et reportent les dentures 114, 116 en prise avec les rainures 420. La coopération ainsi définie entre les dièdres convexes 120 et les dièdres concaves 420 assure une indexation automatique, autour de l'axe 406, entre la pièce intermédiaire d'entraînement 400 et la platine support 100. De ce fait, la bague de commande 300 étant liée à rotation à la pièce 400 par l'intermédiaire des tiges 312, 314, on obtient une indexation automatique de la bague de commande 300 par rapport au commutateur porté par le platine 100, en cas de retrait du volant.

Lors de la réinstallation de ce dernier, les faces 434, 436 facilitent l'insertion du doigt de commande 208 dans la découpe 432. On notera par ailleurs que si le doigt de commande 208 n'est pas aligné avec la découpe 432 lors de la réinstallation du volant, les ressorts 416, 418 autorisent un recul de la pièce intermédiaire d'entraînement 400 afin d'éviter toute détérioration du dispositif.

Bien entendu la présente invention n'est pas limitée au mode de réalisation particulier qui vient d'être décrit mais s'étend à toutes variantes conformes à son esprit.

Ainsi par exemple l'anneau moteur 200 pourrait être pourvu d'une pluralité de doigts de commande 208. De même, on pourrait prévoir un doigt de commande 208 solidaire de la pièce intermédiaire d'entraînement 400, et adapté pour pénétrer dans une découpe 432 ménagée dans l'anneau moteur 200.

Le nombre de tiges d'entraînement assurant la liaison en rotation entre la bague de commande 300 et la pièce 400 n'est pas limité au mode de réalisation représenté.

Le cas échéant, les tiges d'entraînement 312, 314 pourraient être solidaires de la pièce 400 et engagées dans des alésages homologues ménagés dans la bague de commande 300.

Par ailleurs, selon le mode de réalisation décrit dans le détail précédemment, la pièce intermédiaire d'entraînement 400 est guidée à rotation sur la platine 100 entre l'élément moteur 200 et la bague de commande 300, la pièce intermédiaire 400 étant d'une part liée à rotation avec l'élément moteur 200 tout en étant susceptible de débattement radial par rapport à celui-ci, et d'autre part liée à rotation avec la bague de commande 300 tout en étant susceptible de débattement axial par rapport à celle-ci.

Cependant d'autres variantes peuvent être retenues dans le cadre de l'invention.

Selon une première variante, la pièce intermédiaire d'entraînement 400 peut ainsi être liée à rotation avec l'élément moteur 200 tout en étant susceptible de débattement axial par rapport à celui-ci, et d'autre part liée à rotation avec la bague de commande 300 tout en étant susceptible de débattement radial par rapport à celle-ci.

Selon une seconde variante, la pièce intermédiaire d'entraînement 400 peut être liée à rotation avec l'élément moteur 200 et la bague de commande 300 et susceptible de débattement radial et de débattement axial par rapport à la bague de commande 300.

Selon une troisième variante, la pièce intermédiaire d'entraînement 400 peut être liée à rotation avec l'élément moteur 200 et la bague de commande 300 et susceptible de débattement radial et de débattement axial par rapport à l'élément moteur 200.

**Revendications**

1. Dispositif de réinitialisation de commutateur électrique pour l'alimentation des indicateurs de changement de direction de véhicule automobile, caractérisé par le fait qu'il comprend :
   – un élément moteur (200) lié à rotation avec le volant du véhicule,
   – une bague de commande (300) guidée à rotation sur une platine support (100), et
   – une pièce intermédiaire d'entraînement (400) assurant une liaison à rotation entre l'élément moteur (200) et la bague de commande (300) tout en étant susceptible de débattement radial et/ou axial par rapport à l'élément moteur (200) ou la bague de commande (400).

2. Dispositif de réinitialisation selon la revendication 1, caractérisé par le fait que la pièce intermédiaire d'entraînement (400) est guidée à rotation sur la platine (100) entre l'élément moteur (200) et la bague de commande (300), la pièce intermédiaire (400) étant d'une part liée à rotation avec l'élément moteur (200) tout en étant susceptible de débattement radial par rapport à celui-ci, et d'autre part liée à rotation avec la bague de commande (300) tout en étant susceptible de débattement axial par rapport à celle-ci.

3. Dispositif de réinitialisation selon la revendication 1, caractérisé par le fait que la pièce intermédiaire d'entraînement (400) est liée à rotation avec l'élément moteur (200) tout en étant susceptible de débattement axial par rapport à celui-ci, et d'autre part liée à rotation avec la bague de commande (300) tout en étant susceptible de débattement radial par rapport à celle-ci.

4. Dispositif de réinitialisation selon la revendication 1, caractérisé par le fait que la pièce intermédiaire d'entraînement (400) est liée à rotation avec l'élément moteur (200) et la bague de commande (300) et que la pièce intermédiaire d'entraînement (400) est susceptible de débattement radial et de débattement axial par rapport à la bague de commande (300).

5. Dispositif de réinitialisation selon la revendication 1, caractérisé par le fait que la pièce intermédiaire d'entraînement (400) est liée à rotation avec l'élément moteur (200) et la bague de commande (300) et que la pièce intermédiaire d'entraînement (400) est susceptible de débattement radial et de débattement axial par rapport à l'élément moteur (200).

6. Dispositif de réinitialisation selon l'une des revendications 1 à 5, caractérisé par le fait qu'il comprend un organe élastique (416, 418) intercalé entre la bague de commande (300) et la pièce intermédiaire d'entraînement (400), pour solliciter cette pièce (400) vers le volant du véhicule automobile.

7. Dispositif de réinitialisation selon la revendication 6, caractérisée par le fait que la pièce intermédiaire d'entraînement (400) est maintenue sur la platine support (100), à l'encontre de la sollicitation exercée par l'organe élastique (416, 418), par au moins une languette élastique (110, 112).

8. Dispositif de réinitialisation selon la revendication 7, caractérisé par le fait que chaque languette (110, 112) comprend une surface d'arrêt (120) non plane, apte à reposer contre une structure homologue (420) ménagée sur la pièce intermédiaire d'entraînement (400) pour assurer un effet d'auto-centrage de la pièce (400) sur la platine support (100), lors du retrait du volant.

9. Dispositif de réinitialisation selon la revendication 8, caractérisé par le fait que la surface d'arrêt (120) prévue sur chaque languette (110, 112) a la forme d'un dièdre convexe, et que chaque structure homologue ménagée sur la pièce intermédiaire d'entraînement (400) a la forme d'un dièdre concave.

10. Dispositif de réinitialisation selon l'une des revendications 1 à 9, caractérisé par le fait que la pièce intermédiaire d'entraînement (400) comprend au moins une découpe radiale (432) recevant un doigt de commande (208) solidaire de l'élément moteur (200).

11. Dispositif de réinitialisation selon la revendication 10, caractérisé par le fait que la découpe (432) comprend deux bords d'engagement (434, 436), inclinés par rapport à la direction d'introduction du doigt de commande (208).

12. Dispositif d'entraînement selon l'une des revendications 1 à 11, caractérisé par le fait que la liaison à rotation entre la bague de commande (300) et la pièce intermédiaire d'entraînement (400) est définie par au moins une tige de commande (312, 314) et un alésage complémentaire (412, 414) ménagés respectivement dans la bague de commande (300) ou la pièce intermédiaire d'entraînement (400).

13. Dispositif de réinitialisation selon l'une des revendications 1 à 12, caractérisé par le fait que la bague de commande (300) et la pièce intermédiaire d'entraînement (440) sont guidées à rotation sur un manchon (104) solidaire de la platine support (100).

14. Dispositif de réinitialisation selon l'une des revendications 1 à 13, caractérisé par le fait que l'élément moteur (200) est formé d'un anneau (202) pourvu d'un doigt de commande excentré (208).

## Patentansprüche

1. Rückstellvorrichtung für einen elektrischen Schalter zum Betrieb von Richtungswechselanzeigern eines Kraftfahrzeuges, dadurch gekennzeichnet, daß sie umfaßt:
– ein mit dem Lenkrad des Fahrzeugs in Drehverbindung stehendes Antriebselement (200),
– einen Steuerring (300), der auf einer Trägerplatte (100) drehbar geführt ist, und
– ein Antriebszwischenstück (400), welches eine Drehverbindung zwischen dem Antriebselement (200) und dem Steuerring (300) gewährleistet, zugleich aber radial und/oder axial gegenüber dem Antriebselement (200) bzw. dem Steuerring (400) verschiebbar ist.

2. Rückstellvorrichtung nach Anspruch 1, dadurch gekennzeichnet, daß das Antriebszwischenstück (400) drehbar auf der Platte (100) zwischen dem Antriebselement (200) und dem Steuerring (300) geführt ist, wobei das Antriebszwischenstück (400) einerseits in Drehverbindung mit dem Antriebselement (200) steht, wobei es gegenüber diesem radial verschiebbar ist, und andererseits in Drehverbindung mit dem Steuerring (300) steht, wobei es diesem gegenüber axial verschiebbar ist.

3. Rückstellvorrichtung nach Anspruch 1, dadurch gekennzeichnet, daß das Antriebszwischenstück (400) in Drehverbindung mit dem Antriebselement (200) steht, wobei es gegenüber diesem axial verschiebbar ist, und andererseits in Drehverbindung mit dem Steuerring (300) steht, wobei es gegenüber diesem radial verschiebbar ist.

4. Rückstellvorrichtung nach Anspruch 1, dadurch gekennzeichnet, daß das Antriebszwischenstück (400) in Drehverbindung mit dem Antriebselemenstück (200) und dem Steuerring (300) steht, und daß das Antriebszwischenstück (400) radial und axial gegenüber dem Steuerring (300) verschiebbar ist.

5. Rückstellvorrichtung nach Anspruch 1, dadurch gekennzeichnet, daß das Antriebszwischenstück (400) in Drehverbindung mit dem Antriebselement (200) und dem Steuerring (300) steht, und daß das Antriebszwischenstück (400) radial und axial gegenüber dem Antriebselement (200) verschiebbar ist.

6. Rückstellvorrichtung nach einem der Ansprüche 1 bis 5, dadurch gekennzeichnet, daß es ein elastisches Organ (416, 418) aufweist, welches zwischen dem Steuerring (300) und dem Antriebszwischenelement (400) eingefügt ist, um dieses Stück (400) in Richtung auf das Lenkrad des Kraftfahrzeugs vorzuspannen.

7. Rückstellvorrichtung nach Anspruch 6, dadurch gekennzeichnet, daß das Antriebszwischenstück (400) auf der Trägerplatte (100) entgegen der durch das elastische Organ (416, 418) ausgeübten Vorspannkraft mittels mindestens einer elastischen Zunge (110, 112) gehalten ist.

8. Rückstellvorrichtung nach Anspruch 7, dadurch gekennzeichnet, daß jede Zunge (110, 112) eine nicht plane Arretierungsoberfläche (120) aufweist, welche an einer entsprechenden, auf dem Antriebszwischenstück (400) eingearbeiteten Struktur in Eingriff bringbar ist, um die Wirkung einer Selbstzentrierung des Antriebszwischenstücks (400) auf der Trägerplatte (100) zu gewährleisten, wenn das Lenkrad abgezogen wird.

9. Rückstellvorrichtung nach Anspruch 8, dadurch gekennzeichnet, daß die auf jeder Zunge (110, 112) vorgesehene Arretierungsoberfläche (120) die Form eines konvexen Keiles besitzt und daß die jeweilig entsprechende Struktur, welche in das Antriebszwischenstück (400) eingearbeitet ist, die Form einer konkaven Keilnut besitzt.

10. Rückstellvorrichtung nach einem der Ansprüche 1 bis 9, dadurch gekennzeichnet, daß das Antriebszwischenstück (400) mindestens einen radialen Einschnitt (432) aufweist, welcher einen mit dem Antriebselement (200) fest verbundenen Steuernocken (208) aufnimmt.

11. Rückstellvorrichtung nach Anspruch 10, dadurch gekennzeichnet, daß der Einschnitt (432) zwei Eingriffsränder (434, 436) besitzt, welche zur Einführungsrichtung des Steuernockens (208) hin geneigt sind.

12. Rückstellvorrichtung nach einem der Ansprüche 1 bis 11, dadurch gekennzeichnet, daß die Drehverbindung zwischen dem Steuerring (300) und dem Antriebszwischenstück (400) durch mindestens eine Steuerstange (312, 314) und eine entsprechende komplementäre Ausnehmung (412, 414) gebildet wird, welche jeweils an den Steuerring (300) bzw. dem Antriebszwischenstück (400) ausgebildet sind.

13. Rückstellvorrichtung nach einem der Ansprüche 1 bis 12, dadurch gekennzeichnet, daß der Steuerring (300) und das Antriebszwischenstück (400) auf einer mit der Trägerplatte (100) fest verbundenen Manschette (104) drehbar geführt sind.

14. Rückstellvorrichtung nach einem der Ansprüche 1 bis 13, dadurch gekennzeichnet, daß das Antriebselement (200) von einem Ring (202) gebildet ist, welcher mit einem vorstehenden Steuernocken (208) versehen ist.

## Claims

1. Means for reinitialising an electrical switch supplying the turning indicators of a motor vehicle characterised in that it comprises:

   – a drive member (200) rotationally associated with the steering wheel of the vehicle,

   – a control ring (300) which is rotatably guided on a supporting plate (100), and

   – an intermediate drive member (400) providing a rotational link between the drive member (200) and the control ring (300) while being capable of moving freely radially and/or axially with respect to the drive member (200) or the control ring (400).

2. Reinitialisation means according to claim 1, characterised in that the intermediate drive member (400) is rotatably guided on the plate (100) between the drive member (200) and the control ring (300), the intermediate member (400) being on the one band rotatably linked with the drive member (200) while being capable of moving freely radially with respect to the latter, and on the other hand rotationally associated with the control ring (300) while capable of moving freely axially with respect to the latter.

3. Reinitialisation means according to claim 1, characterised in that the intermediate drive member (400) is rotatably linked with the drive member (200) while being capable of moving freely axially with respect to it, and is also rotatably associated with the control ring (300) while having radial freedom of movement with respect to the latter.

4. Reinitialisation means according to claim 1, characterised in that the intermediate drive member (400) is rotatably associated with the drive member (200) and the control ring (300) and in that the intermediate drive member (400) is capable of moving freely radially and axially with respect to the control ring (300).

5. Reinitialisation means according to claim 1, characterised in that the intermediate drive member (400) is rotatably associated with the drive member (200) and the control ring (300) and in that the intermediate drive member (400) can move freely radially and axially with respect to the drive member (200).

6. Reinitialisation means according to any one of claims 1 to 5, characterised in that it comprises an elastic member (416, 418) placed between the control ring (300) and the intermediate drive member (400) to push the latter (400) towards the steering wheel of the motor vehicle.

7. Reinitialisation means according to claim 6, characterised in that the intermediate drive member (400) is held on the supporting plate (100) against the thrust exerted by the elastic member (416, 418) by means of an elastic tongue (110, 112).

8. Reinitialisation means according to claim 7, characterised in that each tongue (110, 112) comprises a non-planar stopping surface (120) which is capable of resting against a similar structure (420) provided in the intermediate drive member (400) to ensure that the part (400) is self-centred on the supporting plate (100) when the steering wheel is retracted.

9. Reinitialisation means according to claim 8, characterised in that the stopping surface (120) provided on each tongue (110, 112) has the shape of a convex dihedron, and that each similar structure provided on the intermediate drive member (400) has the shape of a concave dihedron.

10. Reinitialisation means according to any one of claims 1 to 9, characterised in that the intermediate drive member (400) comprises at least one radial cut-out (432) which receives a control pin (208) which is integral with the drive member (200).

11. Reinitialisation means according to claim 10, characterised in that the cut-out (432) has two engaging edges (434, 436) inclined with reference to the direction with which the control pin (208) is introduced.

12. Drive means according to any one of claims 1 to 11, characterised in that the rotational link between the drive ring (300) and the intermediate drive member (400) is provided by at least one control rod (312, 314) and a complementary bore (412, 414) provided in the control ring (300) or the intermediate drive member (400) respectively.

13. Reinitialisation means according to any one of claims 1 to 12, characterised in that the control ring (300) and the intermediate drive member (440) are rotationally guided on a sleeve (104) integral with the supporting plate (100).

14. Reinitialisation means according to any one of claims 1 to 13, characterised in that the drive member (200) is formed of a ring (202) provided with an eccentric control pin (208).